# EUROPÄISCHE PATENTANMELDUNG

(11) **EP 1 406 191 A1**
(43) Veröffentlichungstag der Anmeldung: **07.04.2004**
(21) Anmeldenummer: 02022499.4
(22) Anmeldetag: 05.10.2002
(51) Int. Cl.: G06F 17/60

(54) **Verfahren zum Kontrollieren und/oder Überwachen eines gekoppelten Prozessnetzwerkes**

(71) Anmelder: Xpert SA, 1705 Fribourg (CH)
(72) Erfinder: Katzy, Bernhard R., Prof.Dr., 2311 KL Leiden (NL)
(74) Vertreter: Fischer, Michael, Dr.

(57) **Zusammenfassung**

Der Erfindung liegt die Aufgabe zugrunde, ein Verfahren zum Kontrollieren und/oder Überwachen eines gekoppelten Prozessnetzwerkes anzugeben.

Diese Aufgabe wird erfindungsgemäss dadurch gelöst, dass
a) die Prozesse bezüglich der in diesen Prozessen zu erbringenden Leistungen innerhalb des gekoppelten Prozessnetzwerkes definiert werden,
b) die Objekte bezüglich der von diesen Objekte erbringbaren Leistungen innerhalb des gekoppelten Prozessnetzwerkes definiert werden,
c) die Leistungen jedes Objekts quantitätsbezogen einem oder mehreren Prozessen und/oder einem oder mehreren Ergebnissen zugeordnet werden,
d) die Zuordnung der Leistungen anhand von vorbestimmbaren Plausibilitätsregeln bei einer Plausibilitätsverletzung transparent gemacht und ggfs. verweigert wird,
e) die Zuordnung der Leistungen nach erfolgter Plausibilitätsakzeptanz verdichtet wird, und
f) die zugeordneten verdichteten Leistungen anhand von vorbestimmbaren die Wechselwirkung der Prozesse im gekoppelten Prozessnetzwerk charakterisierenden Regeln zeitraumbezogen auf mit dem Ergebniserreichungsgrad verknüpfte Grenzwerte überprüft werden.

Auf diese Weise ist das Verfahren mit einer sehr effizienten Datenverwaltung und -eingabe ausgestaltet, aus der eine Bestimmung der Leistung des Prozessnetzwerkes und im besonderen die Messung einer Verbesserung der Prozesslandschaft auch unter Berücksichtigung nicht-linearer dynamischer Effekte beim Zusammenwirken der Prozesse effizient vorgenommen werden kann.

## Beschreibung

Die Erfindung bezieht sich auf ein Verfahren zum Kontrollieren und/oder Überwachen der dynamischen Leistungsanpassung eines gekoppelten Prozessnetzwerkes auf sich ändernde Anforderungen, mit dem mindestens ein messbares Ergebnis erzielt werden soll, wobei sich das Prozessnetzwerk in eine Anzahl von Prozessen gliedert und Objekte Leistungen innerhalb eines oder mehrerer Prozesse erbringen.

Derartige gekoppelte Prozessnetzwerke finden Sie heute in nahezu allen Bereichen des modernen Lebens. Beispielshaft seien nur ganz allgemein Fertigungs- und Bearbeitungsprozesse, Zuliefer- und Verteilprozesse, aber auch Dienstleistungs-, Entwicklungs- und Vertriebsprozesse genannt. Für derartige Prozessnetzwerke ist es einleuchtend, dass als Ergebnis meist die Effizienz des Prozessnetzwerkes in ökonomischer und immer öfter auch ökologischer Hinsicht im Vordergrund steht. Zur Erreichung des Ergebnisses, das als Ergebnis einer einzelnen Firma, aber auch als Ergebnis eines Netzwerkes von Firmen (z.B. eines Franchise-Prozessnetzwerkes) definiert sein kann, ist es daher ganz bedeutsam, nicht nur die Leistung der logistische Prozess zu einem gegebenen Zeitpunkt, sondern auch die dynamische Entwicklung der Prozessleistung zu erfassen und zu einer erwartbaren Gesamtleistung des Prozessnetzwerkes kumulieren zu können.

Zur Lösung der Aufgabe Prozesseffizienz für einen Betriebspunkt zu kontrollieren existiert eine beinahe unüberschaubare Anzahl von individuellen Tools und Firmen, die auf diesen Gebieten beratend tätig sind. Jüngst veröffentlichte gattungsgemässe Verfahren der oben genannten Art sind dabei auch aus dem neuseeländischen Patent 336 275, dem amerikanischen Patent 6,233,537, der veröffentlichten amerikanischen Patentanmeldung US 2002 049621 und der internationalen Patentanmeldung WO01/26014 bekannt. Diese Verfahren basieren stets darauf, dass die Leistungen der einzelnen Prozesse gemessen werden und anschliessend aufaddiert werden, was diese Verfahren daher auf die Abbildung linearer Abhängigkeiten im Prozessnetzwerk limitiert (degradiert).

All diese heute bekannten Verfahren gewährleisten es jedoch nicht, das Verfahren der eingangs genannten Art mittels einer sehr effizienten Datenverwaltung und -eingabe so auszugestalten, dass die Bestimmung der Leistung des Prozessnetzwerkes und im besonderen die Messung einer Verbesserung der Prozesslandschaft auch unter Berücksichtigung nicht-linearer dynamischer Effekte beim zusammenwirken der Prozesse effizient vorgenommen werden können.

Der vorliegenden Erfindung liegt daher die Aufgabe zugrunde, ein Verfahren zum Kontrollieren und/oder Überwachen eines gekoppelten Prozessnetzwerkes anzugeben, mit dem eine zeitgerechte und unmittelbare Messung von aktueller Prozessleistung und dynamischer Leistungsentwicklung/verbesserung bei geringer Eingabeintensität von Daten ermöglicht ist.

Diese Aufgabe wird bei einem Verfahren der eingangs genannten Art erfindungsgemäss dadurch gelöst, dass
a) die Prozesse bezüglich der in diesen Prozessen zu erbringenden Leistungen innerhalb des gekoppelten Prozessnetzwerkes definiert werden,
b) die Objekte bezüglich der von diesen Objekten erbringbaren Leistungen innerhalb des gekoppelten Prozessnetzwerkes definiert werden,
c) die Leistungen jedes Objekts quantitätsbezogen einem oder mehreren Prozessen und/oder einem oder mehreren Ergebnissen zugeordnet werden,
d) die Zuordnung der Leistungen anhand von vorbestimmbaren Plausibilitätsregeln bei einer Plausibilitätsverletzung transparent gemacht und ggfs. verweigert wird,
e) die Zuordnung der Leistungen nach erfolgter Plausibilitätsakzeptanz verdichtet wird, und
f) die zugeordneten verdichteten Leistungen anhand von vorbestimmbaren die Wechselwirkung der Prozesse im gekoppelten Prozessnetzwerk charakterisierenden Regeln zeitraumbezogen auf mit dem Ergebniserreichungsgrad verknüpfte Grenzwerte überprüft werden.

Mit diesem Verfahrensaufbau werden die Prozesse und die Objekte für die spätere Dateneingabe für die Leistungserbringung durch die Objekte so aufbereitet, dass die effiziente Erfassung überhaupt erst ermöglicht ist. Es wird sozusagen ein Stammdatenpool hinsichtlich der Prozesse und der in diesen Prozessen charakteristischen Leistungen und Leistungseränderungen sowie hinsichtlich der Objekte und der von diesen Objekten erbringbaren Leistungen aufgebaut. Anschliessend erfolgt durch die nur quantitätsbezogene Zuordnung der durch die Objekte für den oder die Prozesse erbrachten Leistungen eine sehr einfache und von absoluten Zahlengrössen (z.B. Stundensätzen, Betriebsdauern) losgelöste Zuordnung der Leistungen, was im vorliegenden Verfahren ebenfalls vollkommen losgelöst ist von einer im strengen Sinne gesehenen buchhalterischen Verrechnung der Leistungen. Aufgrund der Bildung des Stammdatenpools führt die anschliessende Plausibilitätsüberprüfung mittels der Plausibilitätsregeln, die Objekt- und/oder Prozess-bezogen sein können, dazu, dass Fehleingaben, wie die Angabe unwahrscheinlicher Leistungsmuster und/oder kumulierte Fehler, aufgespürt werden können, bevor die zugeordneten Leistungen verdichtet werden. Beispielhaft für ein unwahrscheinliches Leistungsmuster sei eine Vorrichtung genannt, die einem Prozess Prozesswärme liefert und zusätzlich auch die Zuführung von einem bestimmten Material für den Prozess erbracht haben soll, was im vorliegenden Fall aufgrund der angenommenen Modellierung des Prozessnetzwerkes ausgeschlossen sein soll. Eine diesbezügliche Plausibilitätsregel könnte beispielsweise lauten, dass einer Vorrichtung, die zur Aufrechthaltung von Prozessparametern durch Energiezufuhr beiträgt und entsprechend so klassifiziert ist, nicht gleichzeitig die Zuführung der im Prozess verarbeiteten Materialen zugeordnet werden kann. Wird in einem anderen Beispiel ein Vertriebsprozess betrachtet, könnte eine diesbezügliche Plausibilitätsregel ausschliessen, dass ein Objekt, hier ein Vertriebsmitarbeiter, nicht gleichzeitig den Prozessen Verkauf und Controlling Leistungen zuordnen kann.

Durch die plausibilitätsgesicherte Zuordnung kann dann eine Verdichtung der zuordnungen über alle Prozesse und/oder Objekte/Objektgruppen vorgenommen werden, die nun frei von individuellen unplausiblen und frei von systematischen Fehlern im Zuge der Zuordnungen ist. Damit führt die nachfolgende Bewertung anhand von den vorbestimmbaren die Wechselwirkung der Prozesse im gekoppelten Prozessnetzwerk charakterisierenden Regeln dazu, Schwachpunkte oder die besonderen Stärken des Prozesse aufzuspüren. Diese Regeln sind derart gestaltet, dass eine Aussage beispielsweise lauten könnte: Wenn über einen Zeitraum Tⱼ nicht genügend viel Leistung in dem Prozess Pₙ erbracht wurde, wird zum Zeitraum Tⱼ₊₂ eine ausreichende Bearbeitungskapazität im Prozess Pₙ₊₂ nicht erreichbar sein. Entsprechend können die Grenzwerte benutzerdefiniert genau so gesetzt werden, dass der gewünschte Beobachtungs- und Controllinggrad erreicht werden kann. Auf diese Weise ist es aber erst möglich, auch nicht-lineare dynamische Effekte in die Bestimmung des Ergebniserreichungsgrades miteinzubeziehen. Beispielhaft sei die Synergie genannt, die sich ergeben kann, wenn ein für ein bestimmtes Produkt verantwortlicher Vertriebsmitarbeiter in dem Prozess "Aufbau der Kundenbeziehung zum Vertrieb des Produktes X" zugleich dem Kunden den Nutzen verwandter gattungsgemässer Produkte seiner eigenen Firma oder einer im Prozessnetzwerk eingebundenen Firma aufzeigt. Die von diesem Mitarbeiter für das Produkt X erbrachte Leistung kann daher zu einem vorbestimmbaren Prozentsatz auch dem Prozess "Aufbau der Kundenbeziehung zum Vertrieb des Produkts Y" zugerechnet werden. Dieses Beispiel soll verdeutlichen, dass durch die vorbestimmbaren die Wechselwirkung der Prozesse im gekoppelten Prozessnetzwerk charakterisierenden Regeln nicht-lineare dynamische tatsächlich eintretende Effekte in die Bewertung des gekoppelten Prozessnetzwerkes eingebunden werden.

Um das Verfahren im besonderen auch für dynamische Veränderungsprozesse flexible gestalten zu können, ist es vorgesehen, dass die die Wechselwirkung der Prozesse im gekoppelten Prozessnetzwerk charakterisierenden Regeln zeitraumbezogen definiert werden. Auch können die oben erwähnten Stammdaten und die Plausibilitätsregeln zeitbezogen definiert werden, so dass bestimmte Leistungszuordnungen zu einem bestimmten Prozess nur von bestimmten Objekten innerhalb eines bestimmten Zeitraums zugeordnet werden können. Beispielhaft für die flexible Anpassbarkeit des Verfahrens an dynamische Veränderungsprozesse sei zum Beispiel in der Fertigung die Herstellung eines neuen Produkts, in einer Vertriebskette eine geänderte Händlerstruktur und in einer Zulieferkette die Verteilung neuer Produkte mit veränderten physikalischen Eigenschaften (Flüssig-Wasserstoff anstelle von Benzin) genannt.

Eine wesentliche Stärke des vorliegenden Verfahrens liegt darin, dass die einzelnen Objekte nicht quantitätsbezogen ihre Leistungen erfassen müssen, was in der Regel ansonsten immer zu einem relativ hohen administrativen Aufwand führt, sondern nur vergleichsweise selten (z.B. einmal wöchentlich) die erbrachten Leistungen grob den Prozessen zuordnen müssen. Eine im vorliegenden Sinne unter einer nicht quantitätsbezogene Leistungszuordnung verstandene besonders einfache Zuordnung der Leistungen kann gegeben sein, wenn eine Gesamtleistung eines Objektes in prozentualer Stückelung auf den oder die Prozesse zugeordnet werden. Ein Mitarbeiter einer Vertriebsorganisation, der beispielsweise in einem Wochenzeitraum ausschliesslich Offerten für ein Produkt erstellt hat, braucht hier nur einfach den Wert "100 %" für den Prozess "Angebotserstellung" für den Vertrieb dieses einen Produkts anzugeben. Erstellt er die Offerten für zwei oder mehrere Produkte verbleibt er mit seinen Zuordnungen im Prozess "Angebotserstellung" und ordnet nur die prozentuale Verteilung seiner Arbeitsleistung auf die verschiedenen Produkte zu. Im vorliegenden Fall ist das im Sinne der Erfindung abstrahierte Objekt eine natürliche Person gewesen, was aber natürlich auch eine technische Einheit sein könnte, wie z.B. eine Stromversorgungseinrichtung oder Lackierstrasse oder dergleichen.

Für die letztgenannte Lackierstrasse besteht das verknüpfte Prozessnetzwerk aus allen logistische, administrativen und operativen Prozessen, die zum Lackieren von Fahrzeugen während ihrer Herstellung erforderlich sind. Das Ergebnis besteht einleuchtenderweise in einem weitgehend ausschussfreien Lackieren der einzelnen Teile der Fahrzeuge. Als Prozesse innerhalb des gekoppelten Prozessnetzwerkes seien beispielhaft nur die Zufuhr der entsprechenden Fahrzeugteile, der Lacke, aber auch die Projektierung der Computersteuerung für die Lackierroboter und Wartung der Abluftanlage angegeben. Für einen Lackierroboter können daher die Leistungen "Lackieren verschiedener Fahrzeugteile", aber auch die Leistung "Wartungszeit" zugeordnet werden.

Fehlt es in diesem Anschauungsbeispiel z.B. an einer ausreichenden Leistungszuordnung im Prozess "Test neuer Farben und Parameter" kann zu einem späteren Zeitpunkt eine vom Produktmarketing geforderte Umstellung auf neue Farben eine viel zu lange Zeit benötigen, weil zu dem Verhalten der neuen Farben zu geringe Erfahrungen vorliegen. Im Ergebnis kann daher zwar ein aktuell hervorragender Output der Lackierstrasse attestiert werden, das Ergebnis weist jedoch schon jetzt einen sichtbar gemachten Makel auf, weil das Verfahren bereits jetzt frühzeitig vor einem möglichen Leistungsabfall warnt, der sich aufgrund fehlender derzeitig auch erbrachter Testleistungen ergeben wird, d.h. in seiner Gesamtheit betrachtet ist das Ergebnis als nicht zufriedenstellend detektierbar, weil die Kontinuität des angestrebten Ergebnisses zukünftig gefährdet sein wird. Gleiches gilt sicher auch, wenn zu geringe Leistungen in dem Prozess "Wartung" eingestellt werden mit den bekannten auf die zukünftige Leistung des Prozessnetzwerkes negativen Auswirkung in der Verfügbarkeit der Anlagen.

Wie schon voranstehend erläutert wurde, können die Plausibilitätsregeln so definiert werden, dass unwahrscheinliche Muster bei der Zuordnung der Leistungen eines oder mehrerer Objektes und/oder kumulierte Fehler detektiert werden. Damit wird das Verfahren auch weitgehend resistent gegen missbräuliche und betrügerische Leistungszuordnungen/Dateneingaben.

Für den Erfolg des gekoppelten Prozessnetzwerkes ist es besonders bedeutsam, dass zeitraumbezogen und bezogen auf das einzelne Objekt und/oder bezogen auf eine Gruppe von Objekten oder die Gesamtheit der Objekte die Verteilung der Zuordnung zu den Prozessen mittels wissensbasierter Regeln auf die Effizienz des Einsatzes für den oder die Prozesse überprüft werden kann. Damit ist es im besonderen Möglichkeit zu überprüfen, wie effizient das einzelne Objekt eingesetzt ist. Kommt es beispielsweise dazu, dass ein Objekt mehr oder weniger nur einstellige Prozentwerte zur Leistungszuordnung in verschiedenen Prozessen angeben kann, offenbart sich so schnell, dass dieses Objekt jeweils immer einen vergleichsweise hohen Aufwand hat, sich in die jeweils nächste Leistungserbringung "einzuarbeiten". Bei einer Maschine kann dieses Einarbeiten eine neuzuladende Software oder auch eine hardwaremässige Ummontage sein. Bei einem Mitarbeiter kann dieses Einarbeiten das Einlesen in eine bestimmte Tätigkeit oder zwischenzeitlich von anderen vorgenommener Tätigkeiten sein. Es ist leicht nachvollziehbar, dass mit zunehmendem Aufwand für das "Einarbeiten" eines Objekts dessen Effizienz umgekehrt proportional abnimmt, was in einer wissensbasierten Regel entsprechend berücksichtigt werden kann. Zeigt sich aber beispielsweise für eine Gruppe von Objekten, dass diese Gruppe vergleichsweise zuviel Zeit in einen bestimmten Prozess und einen anderen deshalb vernachlässigen muss, so kann eine entsprechende wissensbasierte Regel dieses Missverhältnis sehr schnell aufzeigen. Im positiver Hinsicht kann aber die Zuordnung von Leistungen zu einem vorbestimmbaren Prozess von einer entsprechend formulierten wissensbasierten Regel als besonders frühzeitig erkannt werden, wodurch zum Beispiel eine signifikante Prozessverbesserung oder Produktivitätssteigerung detektiert werden kann. Beispielhaft stellt dies den Fall dar, dass eine schnellere Entwicklung oder schnellere Auslieferung eines neuen Produkts erzielt werden konnte.

Eine weitere besonders vorteilhafte Ausgestaltung der Erfindung liegt vor, indem das messbare Ergebnis durch zeitraumbezogene Sollgrössen definiert wird und die Wahrscheinlichkeit der Erreichung dieser Sollgrössen zeitraumbezogen abgeschätzt wird. Auf diese Weise können mit dem Verfahren Kenngrössen, wie erwarteter Auftragseingang, erwarteter Personal- und/oder Maschinenbedarf, anhand der verdichteten Leistungszuordnungen abgeschätzt und ggfs. bei relevanten Abweichungen durch entsprechende Massnahmen korrigiert werden.

Es ist zudem eine besondere Eigenschaft dieses Verfahrens, dass sogar eine Prozessinnovation und/oder eine Neuprodukteinführung simuliert werden können. Hierzu ist es erforderlichenfalls notwendig, eine Veränderung im gekoppelten Prozessnetzwerk und/oder eine Veränderung des mit dem logistischen Prozess gekoppelten messbaren Ergebnisses anhand der vorbestimmbaren die Wechselwirkung der Prozesse im gekoppelten Prozessnetzwerk charakterisierenden Regeln zu simulieren. Gerade die die Wechselwirkung der Prozesse im gekoppelten Prozessnetzwerk charakterisierenden Regeln sind im günstigsten Fall sehr exakt übernehmbar, wenn die Einführung eines neuen Produktes/Dienstleistung simuliert werden soll. Bei der Einführung einer Prozessinnovation kann eine Modifikation der Regeln schon eher erforderlich sein, weil durch die Änderung im Prozessnetzwerk andere Wechselwirkungserscheinungen unter den verschiedenen Prozessen auftreten können. Grundsätzlich ist aber der Rückgriff auf das vorhandene Regelrepertoire möglich, wenn sich bei einer Ähnlichkeitsanalyse der Prozesseigenschaften Überlappungen zeigen, die die Verwendung gleicher Regeln nahe legen.

Sehr häufig besteht mit der Einführung eines neuen Produktes und/oder eines neuen Prozesses der Wunsch, eine möglichst genaue Kenntnis über zukünftig bereitzuhaltende Ressourcen zu gewinnen. Dieses Ergebnis kann erzielt werden, wenn der sich aufgrund der Veränderung im Prozess und/oder aufgrund der Veränderung des Ergebnisses ergebende Bedarf an der durch eines oder mehrere Objekte zu erbringenden Leistungen simuliert wird und auf definierbare die Leistungsfähigkeit einzelner oder mehrerer Objekte charakterisierender Grenzwerte überprüft wird. Auf diese Weise wird schon bei der Simulation aufgezeigt, ob eine vorhandene Objektlandschaft zur Bewältigung der neuen Aufgabe überhaupt theoretisch in der Lage wäre.

Für die Behebung bestimmter Schwachstellen im gekoppelten Prozessnetzwerk, aber auch für das Erkennen besonders gut funktionierender Abläufe kann im Fall einer Grenzwertverletzung eine transparente Darlegung der Ursache(n) der Grenzwertverletzung vorgenommen werden. Damit wird im besonderen die Ausgabe (optisch und/oder akustisch) des verletzten Grenzwertes, die aktuell angewendete Regel und die daran beteiligten Objekte und Prozess(e) gemeint. Auf diese Weise kann sehr schnell nachvollzogen werden, ob diese Grenzwertverletzung tatsächlich eine negative oder auch positive Richtigkeit hat. Auch ist die zugrundeliegende Regel überprüfbar und bei nicht gelungener Prozessmodellierung das Regelwerk modifizierbar.

Weitere vorteilhafte Ausgestaltungen der Erfindung sind den übrigen Unteransprüchen zu entnehmen.

Ausführungsbeispiele der Erfindung werden anhand von Abbildungen der Benutzeroberflächen eines Windows-fähigen Programms zur Durchführung des Verfahrens näher erläutert. Dabei zeigen:
- Figur 1: eine Benutzeroberfläche zur Modellierung eines gekoppelten Prozessnetzwerkes mit einer Anzahl von Prozessen;
- Figur 2: eine Benutzeroberfläche zur Zuordnung von Leistungen, die Objekte aufgrund ihrer zugewiesenen Funktion zu bestimmten Prozessen beitragen;
- Figur 3: eine Benutzeroberfläche zur Zuordnung von Leistungen zu einem bestimmten Ergebnis;
- Figur 4: eine Benutzeroberfläche zur Objekt- und Ergebnisbezogenen Darstellung der Leistungszuordnungen;
- Figur 5: eine Benutzeroberfläche zur Darstellung des Ergebniserreichungsgrades;
- Figur 6: eine Benutzeroberfläche zur Darstellung eines Gütegrades des Know-Hows der Objekte in den Prozessen; und
- Figur 7: eine Benutzeroberfläche zur Darstellung eines Objekt- und Prozessbezogenen Minderbedarfs bei der Aufgabe eines Ergebnisses.

Das gesamte Verfahren wird vorliegend anhand von Benutzeroberflächen eines Computer-Programms erläutert, welche den Aufbau und den Ablauf des Verfahren anschaulich verdeutlichen.

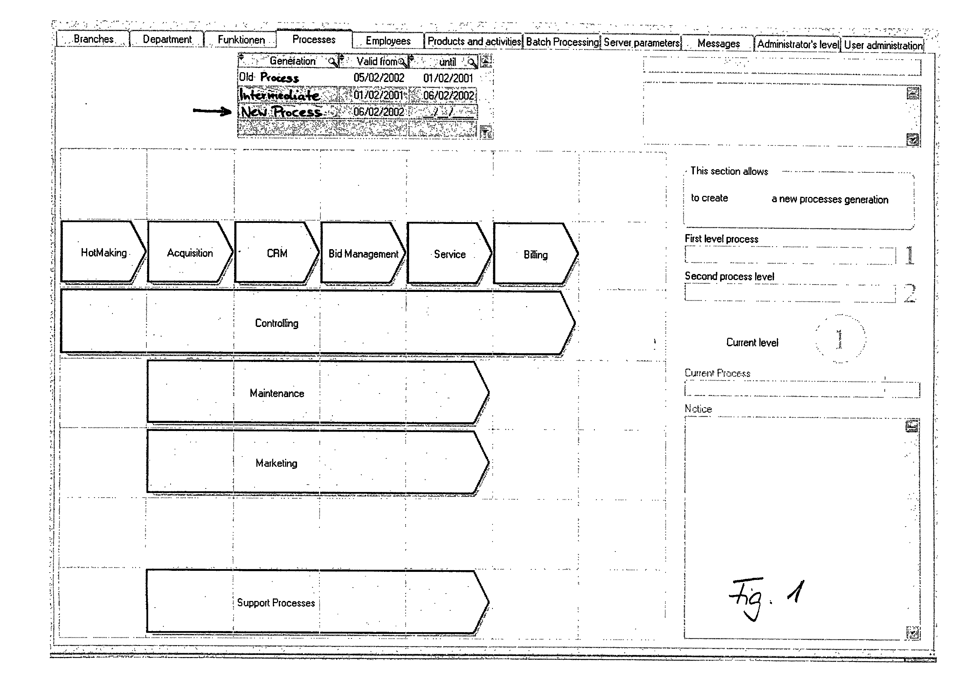

Figur 1 zeigt eine Benutzeroberfläche zur Modellierung eines gekoppelten Prozessnetzwerkes mit einer Anzahl von Prozessen. Die Modellierung des Prozessnetzwerkes mit einer Definition der einzelnen Prozesse, der im Prozessnetzwerk beteiligten Objekte und der von den Objekten zu einem oder mehreren Prozessen erbringbaren Leistungen schafft die Ausgangsbasis für den computergestützten Ablauf des Verfahrens, weil diese Definitionen abschliessend einen sogenannten Stammdatenpool bilden, aus dem später für die Erfassung der Leistungen, die durch die Objekte für einen oder mehrere Prozesse/Ergebnisse erbracht worden sind, geschöpft werden wird.

Im einzelnen handelt es sich bei dem gekoppelten Prozessnetzwerke hier um einen Geschäftsbereich eines Unternehmens, der Endgeräte für einem speziellen Kundenkreis vertreibt. Als Ergebnis weist dieses gekoppelte Prozessnetzwerk den Vertrieb mehrerer gattungsgleicher Endgeräte G1 bis G4 auf. Das gekoppelte Prozessnetzwerk umfasst dabei die Prozessen HotMaking, Acquisition, CRM, Bid Management, Service und Billing innerhalb einer logischen Prozesskette und dazu parallel laufende begleitende Prozesse Controlling, Maintenance, Marketing und Support Processes. Dieses Prozessnetzwerk ist für alle Endgeräte G1 bis G4 in der Darstellung eines obersten Levels, Level 1, gleich. Eine Endgeräte-spezifische Diversifizierung könnte beispielsweise dann durch eine Unterteilung der vorstehend genannten Prozesse in Unterprozesse im Rahmen eines dem Level 1 untergeordneten Levels 2 vorgesehen sein.

Gemäss Pfeil wird beispielshaft angezeigt, dass ein ab dem 06.Februar 2002 gültiger neuer Prozess New Process aktuell dargestellt wird. Damit ist für die am gekoppelten Prozessnetzwerk teilnehmenden Objekte, hier in unterschiedlichen Funktionen tätige Mitarbeiter M1 bis M7, der Stammdatenpool für die Prozesse soweit festgelegt, dass eine Zuordnung der Leistungen der Mitarbeiter M1 bis M7 ab dem 06. Februar 2002 nur zu diesen Prozessen und/oder zu diesen Endgeräten G1 bis G4 ermöglicht ist.

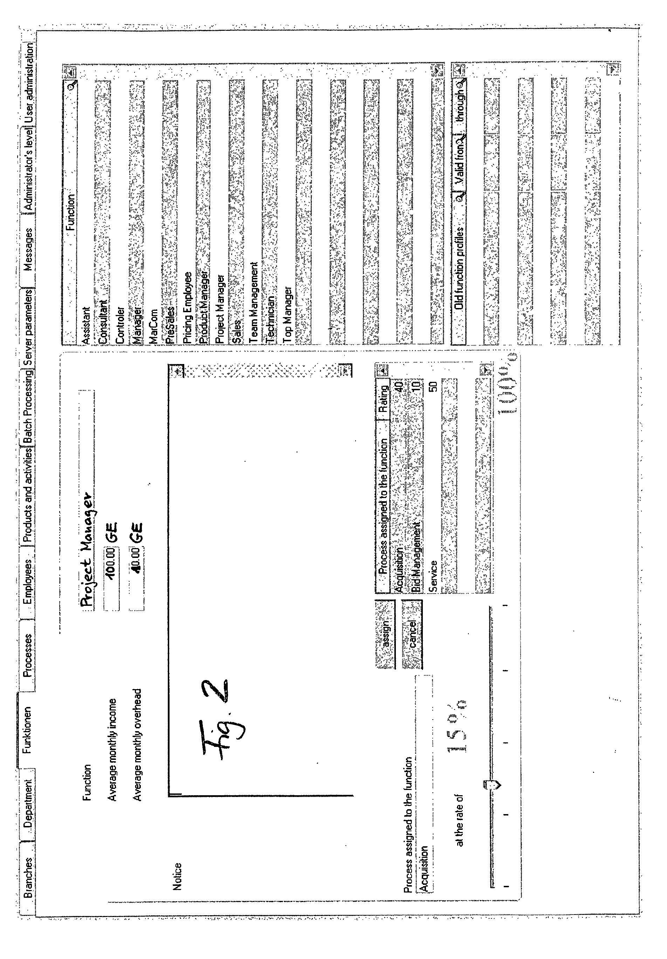

Figur 2 zeigt nun entsprechend eine Benutzeroberfläche zur Zuordnung von Leistungen, die die Mitarbeiter aufgrund ihrer zugewiesenen Funktion zu bestimmten Prozessen beitragen. Diese Zuordnung kann bereits als eine Plausibilitätsregel betrachtet werden, denn die Zuordnung einer bestimmten Leistung in einer bestimmten Funktion zu einem bestimmten Prozess ist so von vornherein festgelegt. Ein Mitarbeiter kann daher weder funktionsfremde Leistungen verbuchen noch kann er zu einem für seine Funktion zugelassenen Prozess mehr Leistungen einbuchen als hier zugelassen. Beispielhaft ist hier die Funktion eines Project Manager's dargestellt, dessen Leistung zu 40% dem Prozess Acquisition, zu 10% dem Prozess Bid Management und zu 50% dem Prozess Service zugeordnet wird. Diese funktionsabhängige starre Zuordnung von Leistungsanteilen zu Prozessen hat den späteren Vorteil, dass sich ein Mitarbeiter in der Funktion Project Manager, welche ihm im Stammdatenpool zugeordnet wird, keinerlei Gedanken darüber machen muss, in welchen Prozessen er welchen Anteil seiner Leistung innerhalb einer vorgegebenen Zeitperiode tätig gewesen ist, sondern er muss allenfalls nur noch angeben, in welcher Stückelung er für die verschiedenen Ergebnisse, hier der Vertrieb der Endgeräte G1 bis G4, tätig gewesen ist.

Selbst diese funktionsabhängige Zuweisung der Leistungen zu bestimmten Prozessen kann zeitbezogen vorgenommen werden, womit auch einem möglichen dynamischen Wandel der funktionbezogenen Leistungszuordnung aufgrund der zeitlich voranschreitenden Prozesse Rechnung getragen werden kann.

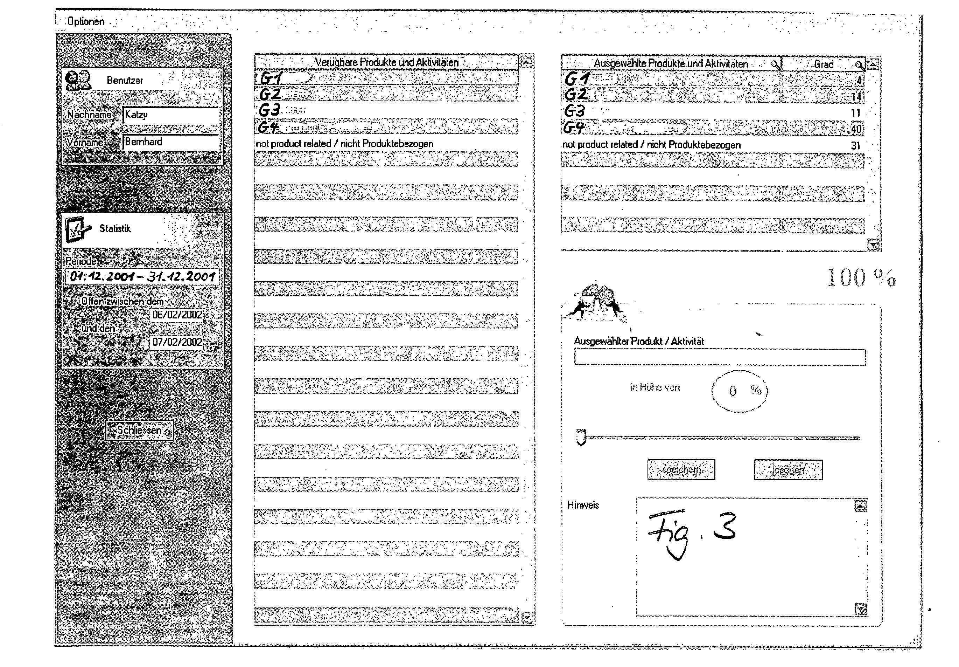

Figur 3 zeigt die Benutzeroberfläche des Computer-Programms an, welche das Verfahren dabei unterstützt, dass die Objekte ihre erbrachte Leistung einem oder mehreren Prozessen oder Ergebnissen zuordnen können. Ein Mitarbeiter M1 bis M7, hier in der Maske beispielshaft eingetragen ist "Bernhard Katzy", hat aufgrund der zu Figur 2 bereits beschriebenen festgelegten Verteilung seiner Leistung zu den Prozessen nur noch aus den verfügbaren Ergebnissen (Tabelle: Verfügbare Produkte und Aktivitäten) auszuwählen und mit einem Navigationspfeil den entsprechende prozentualen Wert einzustellen und durch Drücken des Feldes "Speichern" zu bestätigen. Das Verfahren prüft dann, ob die Aufsummierung aller prozentual eingegebenen Wert gleich 100% ist und prüft ferner aufgrund der vordefinierten Plausibilitätsregeln auch ab, ob die vom Mitarbeiter getätigten Eingaben konform mit diesen Plausibilitätsregeln sind.

Im Fall des vorliegenden Ausführungsbeispiel wird eine Verletzung einer Plausibilitätsregel nicht nur graphisch am Bildschirm angezeigt und im Hintergrund gespeichert, sondern die diesbezügliche Zuordnung der Leistungen wird nicht akzeptiert und muss modifiziert werden, bis eine akzeptierbare Zuordnung der Leistungen zu 100% erreicht ist.

Nur so kann der Mitarbeiter die Abgabe seiner Leistungszuordnung erzielen und damit für das Verfahren bezüglich dieses Zuordnungszeitraums (Periode 01.12.2001 bis 31.12.2001) als ordnungsgemäss die Leistungszuordnung lieferndes Objekt im Hintergrund gespeichert werden.

Anhand der extrem übersichtlichen und selbsterklärenden Oberfläche wird deutlich, mit welch geringem Aufwand die Objekte die Zuordnung ihrer Leistungen zu einem oder mehreren Prozesse und/oder Ergebnissen zeitraumbezogen vornehmen können. Es geht daher bei dieser Art der Leistungszuordnung keineswegs um die buchhalterische Erfassung der Daten, sondern lediglich um eine mehr oder wenige subjektive Zuordung der Leistung des einzelnen Objekts, welches dann im Verfahren nachfolgend über alle Objekte verdichtet wird.

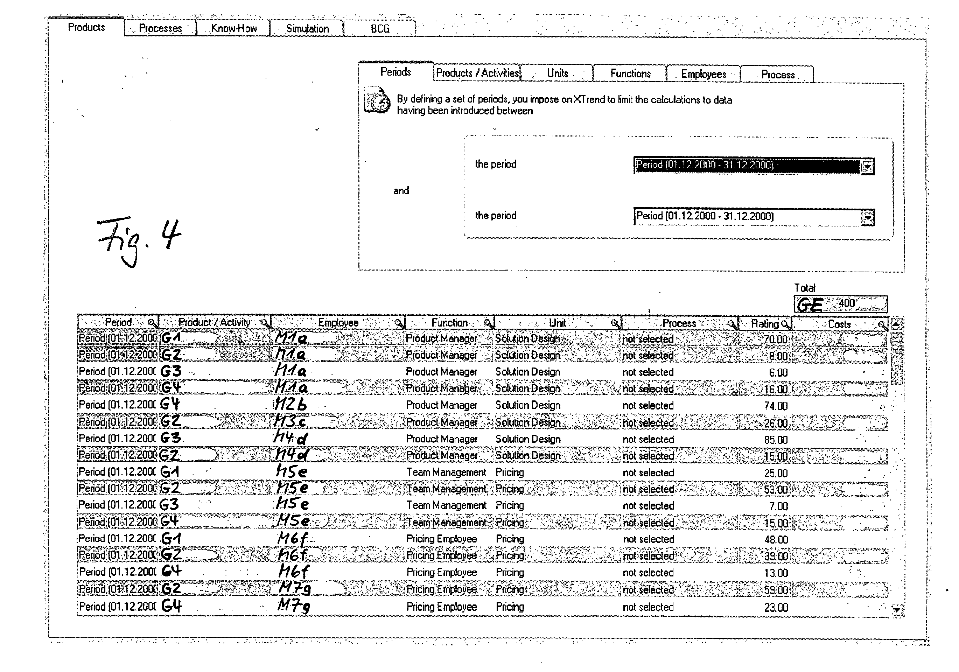

Anhand der Figur 4 ist eine Benutzeroberfläche gezeigt, die die Verdichtung des Daten über alle Objekte, Prozesse und Ergebnisse zeigt. Die in der unteren Hälfte befindliche Tabelle zeigt dabei einfach eine bestimmte Zeitperiode an, für die die Mitarbeiter M1 bis M7 zu den Engeräte G1 bis G4 Leistungen zugeordnet haben. Mitarbeiter M1 beispielsweise hat in seiner Function als Product Manager 70% seiner Leistung für das High-End-Endgerät G1, 8% für das Endgerät G2, 6% für das Endgerät G3 und 16% für das Endgerät G4 für diese bestimmte Zeitperiode erfasst. Aufgrund einer in der Benutzeroberfläche gemäss Figur 2 vorgenommenen Verteilung der Leistung eines Product Managers auf verschiedene Prozesse ergibt sich so eine entsprechende prozentuale Leistungszuordnung zu diesen Prozessen.

Am Beispiel des Mitarbeiters M1 könnte sich auf diese Weise zeigen, dass vielleicht alle in der Funktion des Product Managers tätigen Mitarbeiter schwerpunktmässig ihre Leistung den Endgeräten G1 und G4 zugeordnet haben und die Endgeräte G2 und G3 eher vernachlässigt wurden. Nun tritt das die Wechselwirkung der Prozesse charakterisierende Regelwerk im Rahmen des Verfahrens in Erscheinung. Wird die Darstellung für die Karte "Process" gewählt, würde in der zugehörigen Tabelle die Leistungszuordnung zu den einzelnen Prozessen bezogen auf die einzelnen Ergebnisse (Vertrieb der Endgeräte G1 bis G4) angezeigt.

Das Regelwerk könnte nun in Abbildung der tatsächlich zugrundeliegenden Verhältnisse so gestaltet sein, dass die Vernachlässigung der Leistungen der Product Manager für die Endgeräte G2 und G3 im vorliegenden Fall in der betrachteten Zeitperiode vollkommen akzeptabel sind, weil beispielsweise die Tätigkeiten der Product Manager für die Endgeräte G1 und G4 in ausreichenden Weise auch auf die Endgeräte G2 und G3 ausstrahlen. Das Regelwerk könnte aber auch eine Verletzung eines Grenzwertes, der eine ergebnisrelevante Untergrenze für die Leistungszuordnung der Funktion Product Manager zu diesen Endgeräten G2 und G3 markiert, transparent und so zunächst auf eine Grenzwertverletzung aufmerksam machen. Die Interpretation dieser Grenzwertverletzung obliegt - nun mehr ausserhalb des beschriebenen Verfahrens liegend - einem für das gekoppelte Prozessnetzwerk verantwortlichen Organ, also beispielsweise dem Leiter des Geschäftsbereichs.

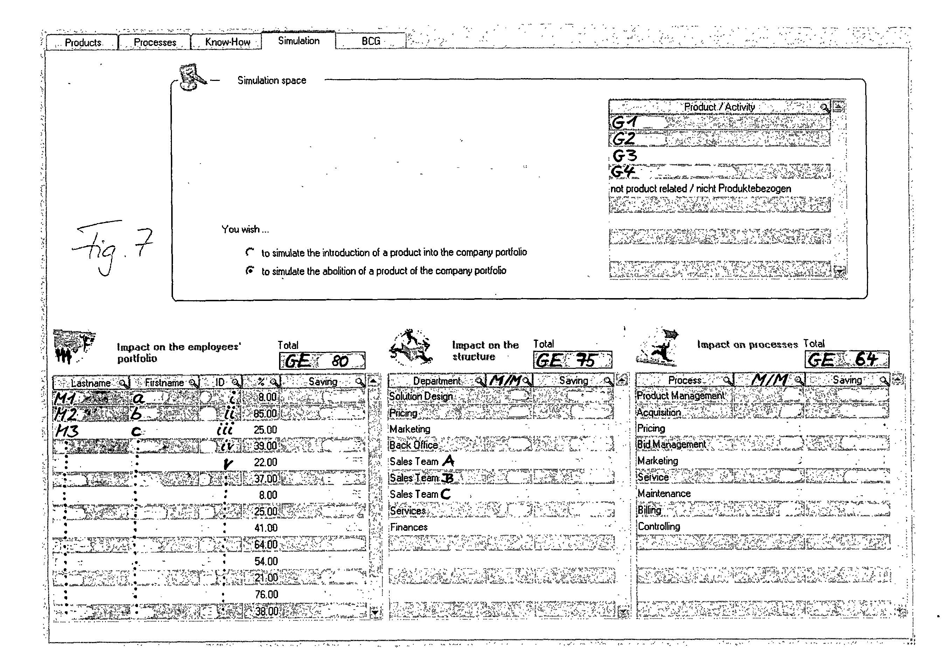

Das vorstehend genannte Beispiel mit einem im Regelwerk berücksichtigten Ausstrahlen der Tätigkeiten der Product Managers für die Endgeräte G1 und G4 auf die Endgeräte G2 und G3 macht zudem auch die dynamischen, nicht-linearen Stärken des Verfahrens deutlich, die in der Eignung zur Simulation von veränderten Prozessen, aber auch veränderten Ergebnissen (z.B. Aufgabe des Vertriebs von Endgerät G1 und Neueinführung des Vertriebs von Endgerät G5) bestehen. Die Beschreibung dieser Eignung zur Simulation anhand dieses einfachen konkreten fiktiven Beispiels sei jedoch bis zur Erläuterung der Figur 7 zurückgestellt, die genau ein Simulationsresultat für ein geändertes Ergebnis darstellt.

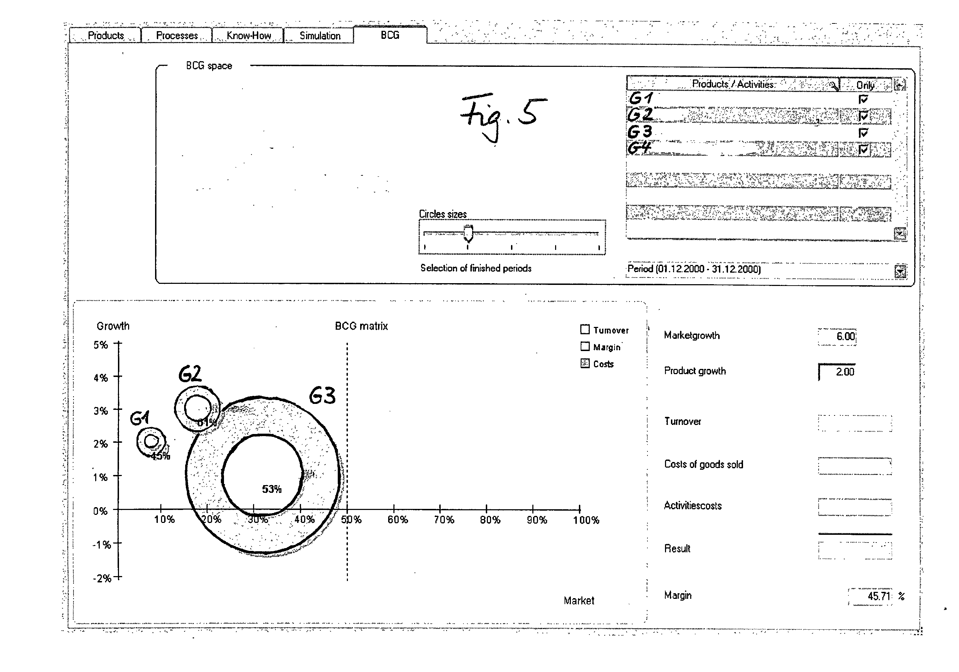

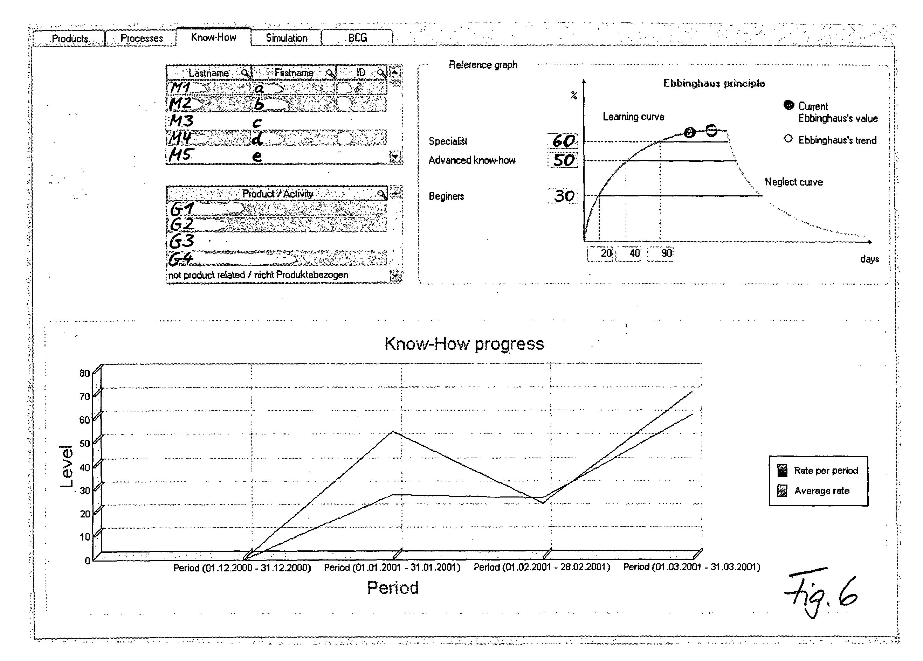

Zwei weitere sich aus dem Verfahren ableitende Benutzeroberflächen zeigen die Figuren 5 und 6, welche die verdichteten Daten unter Zuhilfenahme von vorgebbaren wissensbasierten Regeln so aufbereiten, dass klare Aussagen beispielsweise über den voraussichtlichen Grad der Ergebniserreichung, über die Effizienz des Einsatzes der Objekte für bestimmte Prozesse und auch über die dynamische Entwicklung zur zukünftigen Erreichung des oder der Ergebnisse liefert.

Dabei ist in der Darstellung der Figur 5 eine sogenannte BCG-Matrix angegeben, die unter Verwendung der vom Verfahren gewonnenen verdichteten Leistungszuordnungen und mit dem Rückgriff auf weitere in der Regel buchhalterischer Daten, wie Umsatz und Material- und Fertigungskosten, für die verschiedenen Endgeräte G1, G2 und G3 deren Lage in der BCG-Matrix darlegt.

Die BCG-Matrix geht dabei auf eine wissensbasierte Theorie der Boston-Consulting-Group zurück, die für die zeitliche Marktentwicklung eines Produktes im wesentlichen eine Gauss-Verteilung annimmt und es lehrt, mit dem Vertrieb eines Produktes im steigenden Teil der Gauss-Kurve nicht zu früh einzusteigen und im fallenden Teil der Gauss-Kurve nicht zu spät auszusteigen. Dieser Theorie Rechnung tragend, sind in der in Figur 5 gezeigten BCG-Matrix die den Daten für die Endgeräte G1 bis G3 entsprechenden Punkte eingetragen, die für alle drei Endgeräte G1 bis G3 ein Zentrum in einem steigenden Markt aufweisen und für das Endgerät G3 den grössten Umsatz bei einer Marge von 53%, für das Endgerät G2 einen bedeutenden kleineren Umsatz bei einer Gewinnmarge von 61% und für das Endgerät G1 den kleinsten Umsatz bei einer Gewinnmarge vom 45% ausweisen. Auch hierbei obliegt die Ableitung von Management-Entscheidungen aus dieser Darstellung dem das gekoppelte Prozessnetzwerk administrierenden Organ, also hier wieder der Geschäftsbereichsleitung.

Ein weiteres Beispiel für die Verknüpfung der verdichteten Leistungszuordnungsdaten zeigt die in Figur 6 dargestellte Benutzeroberfläche, welche die Daten für die verdichtete Leistungszuordnung eines jeden einzelnen Mitarbeiter bezogen auf ein auswählbares Ergebnis nach dem durch Ebbinghaus modellierten Lernkurve darstellt. Diese Lernkurve unterstellt, dass bei regelmässiger Befassung mit einem Lerngegenstand einem logarithmischenr Anstieg der Lernkurve ein exponentiellen Abfall der Lernkurve, eine Vergessenskurve für denim Fall des nicht mehr mit dem Lerngegenstand Befasstseins. Im Beispiel kann für einzelne Mitarbeiter M1 bis M7 so eine persönliche Know-How-Entwicklung über der Zeit abgeleitet werden, die beispielsweise zu der Erkenntnis führen kann, dass es wenig Sinn macht, wenn sich der Mitarbeiter M1 gemäss Figur 4 nur zu 6% und 8% den Endgeräte G3 bzw. G2 widmet. Damit führt die Auswertung der verdichteten Daten für die Leistungszuordnung zur Herbeiführung von Management-Entscheidungen für die weiteren Einsatz dieses Mitarbeiters, die in der Fortführung der derzeit aktuellen Leistungsaufteilung oder einer zukünftig veränderten Leistungsaufteilung bestehen kann. Zudem liefert das Verfahren Aussagen über Wirkungsverzüge von Managemententscheidungen, als dem aus der Lernkurve ableitbaren Zeitbedarf für Ausbildung und Lernen, bis hohe Prozesseffizienz erwartet werden kann. Das Verfahren ist dabei so ausgestaltet, dass jedes Auftreten eines Wertes unter 30% in einer separaten Darstellung transparent gemacht wird und daher als eine Art Fehlermeldung betrachtet werden kann.

Zurückkommend auf die Ankündigung der Diskussion von Figur 7 zeigt die Benutzeroberfläche in Figur 7 das simulierte Verhalten des Prozessnetzwerkes bei der beispielshaften Aufgabe des Vertriebs von Endgeräte G1. In den in der unteren Hälfte der Figur 7 dargestellten Tabellen ist leicht ersichtlich, was das Verfahren in die Lage ist, zu simulieren. Die Aufgabe des Ergebnisses "Vertrieb Endgerät G1" führt in der linken Tabellen zu den dort wiedergegebenen Daten für die Beeinflussung der Leistungszuordnung der einzelnen Mitarbeiter. Es lässt sich beispielsweise ableiten, dass für einen Mitarbeiter M2, der zu 85% seine Leistungserbringungsmöglichkeit verliert, offensichtlich eine ganz neue Aufgabe gefunden werden muss.

In der mittleren Tabelle ist ausgewiesen, welche Auswirkungen sich für Gruppen von Mitarbeitern in Personen pro Monat (P/M) ergeben, und in der rechten Tabelle sind die Auswirkung auf die jeweiligen Prozesse in P/M erkennbar. Ebenso können diese Werte auch direkt mit buchhalterischen Geldeinheiten GE verknüpft werden, die oberhalb der Tabelle ausgewiesen werden können. Aufgrund des im Verfahren berücksichtigbaren nicht-linearen Verhaltens der Prozesse sind im Ausführungsbeispiel bezogen auf die Mitarbeiter 80 GE einsparbar. Bezogen auf die Objektgruppen sind dies schon nur noch 75 GE und bezogen auf die Prozesse sind nur noch 64 GE erzielbar. Diese Unterschiede sind durch das entsprechende Regelwerk bedingt, welches beispielsweise annahm, dass die für das Endgerät G1 erbrachte Leistung eines Product Managers auch zu einem gewissen vorbestimmten Grad auch auf das Ergebnisse "Vertrieb Endgerät G2" und "Vertrieb Endgerät G3" ausstrahlte und diese Aufgaben folglich mit der Aufgabe des Ergebnisses "Vertrieb Endgerät G1" nun wieder separat zu erbringen sind.

Genauso erlaubt es das Verfahren auch umgekehrt die Einführung eines neues Ergebnisses "Vertrieb eines neuen Endgeräts" zu simulieren. Wenn beispielsweise davon ausgegangen werden kann, dass der Vertrieb des neuen Endgeräts den Vertriebsgepflogenheiten, d.h. damit auch dem Regelwerk der übrigen Endgeräte G1 bis G4 folgt, kann sogar das bisher zugrundeliegende Regelwerk übernommen werden. Verlangt der Vertrieb dieses neuen Endgeräts jedoch sogar eine Änderung der Prozesse und ihrer Wechselwirkung, so ist zu prüfen, in welcher Weise das Regelwerk anhand möglichst weniger Änderungen daran angepasst werden kann. Eine einfache Regel könnte beispielsweise lauten, dass zusätzlich zur Leistung im Prozess "Customer Relationship Management (CRM) im Volumen von 25% der im Prozess CRM erbrachten Leistung eine zusätzliche Leistung für einen neuen (Zwischen)-Prozessschritt erwartet wird. Entsprechend könnte durch diese Änderung aber auch noch berücksichtigt werden, dass durch diesen höheren Aufwand der Aufwand im Prozess CRM für die anderen Endgeräte signifikant sinkt, so dass aus der Einführung des neuen Endgeräts in Summe zwar eine Aufwandssteigerung resultiert, diese Aufwandssteigerung jedoch infolge des gekoppelten Prozessnetzwerkes wesentlich geringer ausfällt als diese mit einem linear arbeitenden buchhalterischen Tool erwartet worden wäre.

Die Ausführung von weiteren beispielshaften Beschreibungen möglicher Ergebnisse, Prozess und Objekte liesse sich an dieser Stelle beliebig fortsetzen. Es sei angemerkt, dass die vorstehend angeführten Beispiel das Wesen der Erfindung keinesfalls auf diese Beispiels limitieren sollen. Eine Beschreibung wäre gleichfalls für jede Art von gekoppeltem Prozessnetzwerk in der Fertigung, in der Logistik, in der Dienstleistung usw. möglich gewesen.

Im Summe sei nochmals herausgestellt, dass das Verfahren es erstmals erlaubt, die Effizienz eines Prozessnetzwerkes und die Effizienz von Veränderungsprozessen auch mit seinem/ihrem nicht-linearen, dynamischen Verhalten in einfacher Weise zu erfassen und abzuschätzen zu können.

## Patentansprüche

1. Verfahren zum Kontrollieren und/oder Überwachen eines gekoppelten Prozessnetzwerkes, mit dem mindestens ein messbares Ergebnis erzielt werden soll, wobei sich das gekoppelte Prozessnetzwerk in eine Anzahl von Prozessen gliedert und Objekte Leistungen innerhalb eines oder mehrerer Prozesse erbringen,
**dadurch gekennzeichnet, dass**
a) die Prozesse bezüglich der in diesen Prozessen zu erbringenden Leistungen innerhalb des gekoppelten Prozessnetzwerkes definiert werden,
b) die Objekte bezüglich der von diesen Objekte erbringbaren Leistungen innerhalb des gekoppelten Prozessnetzwerkes definiert werden,
c) die Leistungen jedes Objekts quantitätsbezogen einem oder mehreren Prozessen und/oder einem oder mehreren Ergebnissen zugeordnet werden,
d) die Zuordnung der Leistungen anhand von vorbestimmbaren Plausibilitätsregeln bei Plausibilitätsverletzung transparent gemacht und ggfs. verweigert wird,
e) die Zuordnung der Leistungen nach erfolgter Plausibilitätsakzeptanz verdichtet wird,
f) die zugeordneten verdichteten Leistungen anhand von vorbestimmbaren die Wechselwirkung der Prozesse im gekoppelten Prozessnetzwerk charakterisierenden Regeln zeitraumbezogen auf mit dem Ergebniserreichungsgrad verknüpfte Grenzwerte überprüft werden.

2. Verfahren nach Anspruch 1,
**dadurch gekennzeichnet, dass**
die die Wechselwirkung der Prozesse im gekoppelten Prozessnetzwerk charakterisierenden Regeln zeitraumbezogen definiert werden.

3. Verfahren nach Anspruch 1 oder 2,
**dadurch gekennzeichnet, dass**
eine Gesamtleistung eines Objektes in prozentualer Stückelung auf den oder die Prozesse zugeordnet werden.

4. Verfahren nach einem der Ansprüche 1 bis 3,
**dadurch gekennzeichnet, dass**
die Plausibilitätsregeln so definiert werden, dass unwahrscheinliche Muster bei der Zuordnung der Leistungen eines oder mehrerer Objektes und/oder kumulierte Fehler detektiert werden.

5. Verfahren nach einem der Ansprüche 1 bis 4,
**dadurch gekennzeichnet, dass**
zeitraumbezogen und bezogen auf das einzelne Objekt und/oder bezogen auf eine Gruppe von Objekten oder die Gesamtheit der Objekte die Verteilung der Zuordnung zu den Prozessen mittels wissensbasierter Regeln auf die Effizienz des Einsatzes für den oder die Prozesse überprüft wird.

6. Verfahren nach einem der Ansprüche 1 bis 5,
**dadurch gekennzeichnet, dass**
das messbare Ergebnis durch Sollgrössen definiert wird und die Wahrscheinlichkeit der Erreichung dieser Sollgrössen zeitraumbezogen abgeschätzt wird.

7. Verfahren nach einem der Ansprüche 1 bis 6,
**dadurch gekennzeichnet, dass**
eine Veränderung im gekoppelten Prozessnetzwerk und/oder eine Veränderung des mit dem gekoppelten Prozessnetzwerk gekoppelten messbaren Ergebnisses anhand der vorbestimmbaren die Wechselwirkung der Prozesse im gekoppelten Prozessnetzwerk charakterisierenden Regeln simuliert wird.

8. Verfahren nach Anspruch 7,
**dadurch gekennzeichnet, dass**
der sich aufgrund der Veränderung im Prozess und/oder aufgrund der Veränderung des Ergebnisses ergebende Bedarf an der durch eines oder mehrere Objekte zu erbringenden Leistungen simuliert wird und auf definierbare die Leistungsfähigkeit einzelner oder mehrerer Objekte charakterisierender Grenzwerte überprüft wird.

9. Verfahren nach einem der Ansprüche 1 bis 8,
**dadurch gekennzeichnet, dass**
im Fall einer Grenzwertverletzung eine transparente Darlegung der Ursache der Grenzwertverletzung vorgenommen wird.
